# EUROPÄISCHE PATENTSCHRIFT

(11) **EP 0 949 101 B1**
(45) Veröffentlichungstag und Bekanntmachung des Hinweises auf die Patenterteilung: **02.06.2004**
(21) Anmeldenummer: 99101996.9
(22) Anmeldetag: 01.02.1999
(51) Int. Cl.: B60J 7/12

(54) **Klappverdeck für Cabriofahrzeuge**
Foldable top for convertible vehicle
Toit pliant pour véhicule convertible

(30) Priorität: 09.04.1998 DE 19815980
(43) Veröffentlichungstag der Anmeldung: 13.10.1999
(73) Patentinhaber: Edscha Cabrio-Dachsysteme GmbH, 94491 Hengersberg (DE)
(72) Erfinder: Haberl, Franz, 94574 Wallerfing (DE); Schütt, Thomas, 82256 Fürstenfeldbruck (DE)
(74) Vertreter: Sparing, Rolf Klaus

(56) Entgegenhaltungen:
- DE-U- 29 710 720
- US-A- 4 958 882
- US-A- 5 004 291

## Beschreibung

Die Erfindung bezieht sich auf ein Klappverdeck für Cabriofahrzeuge nach dem Oberbegriff des Patentanspruchs 1.

Ein derartiges Klappverdeck ist beispielsweise aus der DE-C-3 724 532 oder US-A-5 004 291 bzw. der DE-C-34 05 920 bekannt Bei den bekannten Verdecken ist jeweils vorgesehen, daß zum Zwecke einer möglichst geringen Beeinträchtigung des Innenraumes des Fahrzeuges in dem von dem in seiner Öffnungsstellung befindlichen Klappverdeck umgrenzten Bereich die Hauptsäule des Verdeckes mehrteilig ausgebildet ist und im wesentlichen jeweils einen Hauptsäulenabschnitt und eine Dachhauthalteschiene umfassen, wobei die Hauptsäulenabschnitte der Karosseriekontur des Fahrzeuges gegenüber nach innen versetzt angeordnet sind und die Dachhauthalteschienen an der Außenseite der Hauptsäulenabschnitte angelenkt und derart ansteuerbar sind, daß sie beim Öffnen des Verdeckes aus einer zum Konturverlauf der Seitenwand der Fahrzeugkarosserie bündigen Stellung in eine näher an den zugeordneten Hauptsäulenabschnitt heran bewegte Verdeckfaltstellung überführbar sind. Für das Verstellen der Dachhauthalteschienen sind dabei jeweils um zueinander und zur Fahrzeuglängsrichtung parallele Achsen schwenkbare Spreizhebel vorgesehen, welcher vermittels einer verhältnismäßig komplizierten Steuerscheibe und eines Mitnehmerfingers antreibbar ist. In Verbindung mit weiteren Maßnahmen am Verdeckgestell führt diese Einrichtung bei dem bekannten Verdeck dazu, daß sich beim vollständigen Falten des Verdeckgestells ein kompaktes Bündel aller Seitenwandteile auf beiden Fahrzeugseiten ergibt, welches lediglich eine minimale Baubreite einnimmt Bei Fahrzeugen mit einem im wesentlichen trapezförmigen Querschnitt zumindest des Verdeckbereiches und wenigstens im wesentlichen über die gesamte Fahrzeuglänge hin gleichbleibender Fahrzeugbreite kann mit einer derartigen Ausbildung der Hauptsäulen der angestrebte Erfolg durchaus erzielt werden, wenngleich sich die Konstruktion insgesamt durch einen verhältnismäßig hohen Herstellungsaufwand auszeichnet, der nur bei sehr teueren Fahrzeugen vertretbar ist.

DE-U-297 10 720 beschreibt ein Verdeck für ein Cabriolet-Fahrzeug, bei dem Gestängeteile während einer Verdecköffnungsbewegung mittels. Spreizelementen und Führungskeilen nach außen vom Kopfbereich der Passagiere wegbewegt werden.

US-A-4,958,882 beschreibt ein Verdeck für ein Cabriolet-Fahrzeug, bei dem ein freies Ende eines Säulenabschnitts mittels einer schrägverlaufenden Drehachse während einer Verdeckschließbewegung in Richtung der Fahrzeugmitte einschwenkt, wobei das Einschwenken über ein Verbindungsglied zwangsgesteuert ist. Ein Hauptspriegel und ein lenkhebel sind an einer karosseriefesten Lagerplatte drehbar angelenkt.

Bei moderneren Fahrzeugbauweisen geht man hauptsächlich aus stilistischen Gründen zunehmend zu einer eher ovalen Querschnittsform der Fahrzeugkarosserie und in vielen Fällen zugleich auch zu einer sich zum Fahrzeugheck hin mehr oder minder verjüngenden Karosseriebreite über. Bei solchen Fahrzeugen führt die bei Faltverdecken der vorgenannten Bauart übliche Verwendung einer ebenen Kinematik für das Verdeckgestänge, bei welcher die Achsen sämtlicher Gelenke innerhalb des Verdeckgestänges quer zur Fahrzeuglängsmittelebene ausgerichtet sind zu einer Beengung in dem von dem in seiner Öffnungsstellung befindlichen Klappverdeck umgrenzten Bereich des Innenraumes des Fahrzeuges, insbesondere zu einer Beengung der Schulterfreiheit der Fondpassagiere, bei abgelegtem Verdeck. Darüber hinaus ergeben sich bei Fahrzeugen mit einer sich zum Fahrzeugheck hin mehr oder minder verjüngenden Karosseriebreite Probleme daraus, daß für das Durchtauchen des untersten Punktes der Hauptsäule ein verhältnismäßig breiter Ausschnitt des Verdeckkastens erforderlich ist, was bei Einsatz der bekannten durch eine ebene Kinematik des Verdeckgestänges gekennzeichneten Bauweisen von Klappverdecken zu einer Erstreckung des Freischnitts für die Verdeckkastenöffnung in den Seitenbereich der einen im wesentlichen ovalen Querschnitt aufweisenden Fahrzeugkarosserie führt, was selbstverständlich nicht hinnehmbar ist.

Der Erfindung liegt daher die Aufgabe zugrunde ein Klappverdeck der eingangs genannten Bauart für Cabriofahrzeuge, insbesondere solche mit im wesentlichen ovaler Karosseriequerschnittsform und sich zum Fahrzeugheck hin verjüngender Karosserieform, dahingehend weiter zu entwickeln, daß bei wenigstens nicht größerem Herstellungsaufwand einerseits eine größtmögliche Schulterfreiheit der Fondpassagiere und andererseits insbesondere im Anlenkbereich für die Hauptsäulen eine schmale Ausbildung des für die Verdeckkastenöffnung erforderlichen Freischnittes in der Fahrzeugkarosserie erreicht werden kann.

Diese Aufgabe wird erfindungsgemäß mit den kennzeichnenden Merkmalen des Anspruchs 1 gelöst. In einer ersten bevorzugten Verwirklichungsform ist die Ausbildung eines räumlichen Viergelenkes vorgesehen, bei dem die Summe der Gelenkfreiheitsgrade wenigstens sechs, vorzugsweise sieben, beträgt.

In einer praktischen Ausführungsform ist hierbei vorgesehen, daß in Verbindung mit einer zueinander parallelen Anordnung und windschiefen Ausrichtung der Anlenkachsen von Hauptsäule und Hauptlenker am hinteren Dachrahmenteil die karosserieseitige Anlenkung des Hauptlenkers als Kugelgelenk, wobei die karosserieseitige Anlenkung der Hauptsäule auf einer horizontalen quer zur Fahrzeuglängsmittelebene ausgerichteten Achse verlagerbar angeordnet ist, dahingehend, daß die karosserieseitige Anlenkung der Hauptsäule als quer zur Fahrzeuglängsmittelebene verstellbares Schiebegelenk ausgebildet ist. Dadurch, daß die Hauptsäule unterendig vermittels eines Dreh-Schiebegelenkes an die Karosserie angeschlossen ist, ist gewährleistet, daß, resultierend aus der Ausrichtung der oberen Anlenkachsen von Hauptsäule und Hauptlenker, das untere Ende der Hauptsäule während des Zusammenklappens des Verdeckgestänges zwangsweise zur Fahrzeugmitte hin verschoben wird und sich somit eine schmale in Fahrzeugquerrichtung wenig Raum beanspruchende Bündelung der seitlichen Verdeckgestänge ergibt, die zum einen eine hinreichende Schulterfreiheit der Fondpassagiere ermöglicht und zum anderen für das Eintauchen des Verdeckes in den Verdeckkasten, insbesondere im Bereich der Wurzel der Hauptsäule nur einen verhältnismäßig schmalen Freischnitt in der Karosserie benötigt.

Um ein Verlagern des unteren Endes der Hauptsäule zur Fahrzeugmitte hin auch unter ungünstigeren Umständen, beispielsweise einem gewissen Verklemmen der Lagerung auf der Achse insbesondere infolge eventueller Oberflächenkorrosion oder Verschmutzung und dergl. mehr in jedem Falle sicher zu stellen ist nach einer Weiterbildung der Erfindung ferner vorgesehen, daß der zwangsweisen Verlagerung der karosserieseitigen Anlenkung der Hauptsäule ein starrer Hilfslenker zugeordnet ist, welcher einerseits an der Karosserie abgestützt ist und andererseits mit einem Abstand zu deren karosserieseitiger Anlenkung an der Hauptsäule angreift.

Im Einzelnen eignet sich diese erste bevorzugte Verwirklichungsform besonders für solche Klappverdecke, deren Hauptsäule und deren Hauptlenker untereinander ungleiche Längen aufweisen.

Ferner ist in einer bevorzugten Einzelausgestaltung weiter vorgesehen, daß die Hauptsäule und der Hauptlenker vermittels einer doppelwandigen Konsole an die Fahrzeugkarosserie angeschlossen sind, wobei wenigstens die das karosserieseitige Ende der Hauptsäule lagernde Achse zwischen den beiden Wandungen der Konsole angeordnet ist, während der Hilfslenker an der bezüglich der Fahrzeuglängsmitte innenliegenden Wandung der die Lagerungen von Hauptsäule und Hauptlenker aufnehmenden Konsole angeordnet ist.

Der Hilfslenker ist zweckmäßigerweise bezüglich der Fahrzeuglängsmittelebene zur Hauptsäule und Konsole außenseitig angeordnet und sowohl an die Hauptsäule als auch an die Konsole vermittels eines Kugelgelenkes angeschlossen.

In einer zweiten bevorzugten Verwirklichungsform ist die Ausbildung eines als räumliches Parallelogramm ausgebildeten Viergelenkes vorgesehen, bei dem die Summe der Gelenkfreiheitsgrade lediglich fünf beträgt.
Diese zweite Verwirklichungsform eignet sich im Einzelnen ausschließlich für solche Klappverdecke, deren Hauptsäule und deren Hauptlenker untereinander absolut gleiche Längen aufweisen.

Zur praktischen Ausführung eines räumlichen Parallelogrammes innerhalb des Verdeckgestänges ist hierbei vorgesehen, daß die Anlenkungen von Hauptsäule und Hauptlenker einerseits an der Fahrzeugkarosserie und andererseits am hinteren Dachrahmenteil derart gestaltet sind, daß sie ein als räumliches Parallelogramm ausgebildetes Viergelenk, bei dem die Summe der Gelenkfreiheitsgrade lediglich fünf beträgt, bilden.

Insbesondere kennzeichnet sich ein dieserart ausgestaltetes Klappverdeck dadurch, daß die Hauptsäule und der Hauptlenker untereinander gleiche Längen aufweisen und um zueinander parallele, windschief ausgerichtete Anlenkachsen am hinteren Dachrahmenteil und um zueinander parallele quer zur Fahrzeuglängsmittelebene ausgerichtete Achsen an der Fahrzeugkarosserie angelenkt sind, wobei lediglich die karosserieseitigen Anlenkung der Hauptsäule quer zur Fahrzeuglängsmittelebene verlagerbar ist Im Übrigen ist auch bei dieser Verwirklichungsform vorgesehen, daß zumindest das die Hauptsäule an der Karosserie abstützende Schiebegelenk in einer doppelwandigen Konsole aufgenommen ist und die Verlagerung des unteren Endes der Hauptsäule zur Fahrzeuglängsmittelebene hin durch einen Hilfsklenker erzwungen wird.

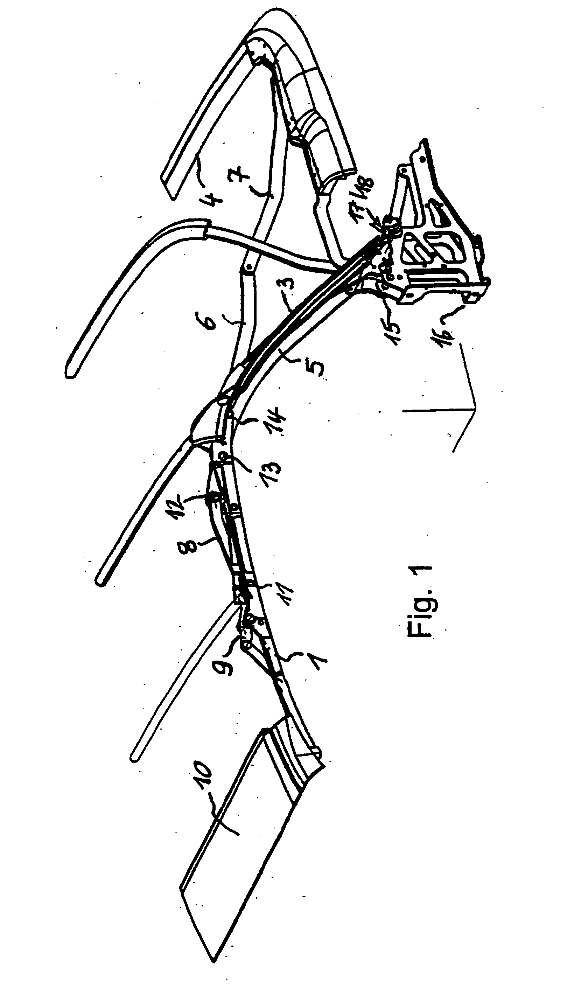

Die Erfindung ist in der nachfolgenden Beispielsbeschreibung anhand eines in der Zeichnung dargestellten Ausführungsbeispieles im Einzelnen beschrieben.
In der Zeichnung zeigt die
- Fig. 1: eine Seitenansicht des Verdeckgestänges eines Klappverdeckes bei in der Schließlage befindlichem Verdeck;

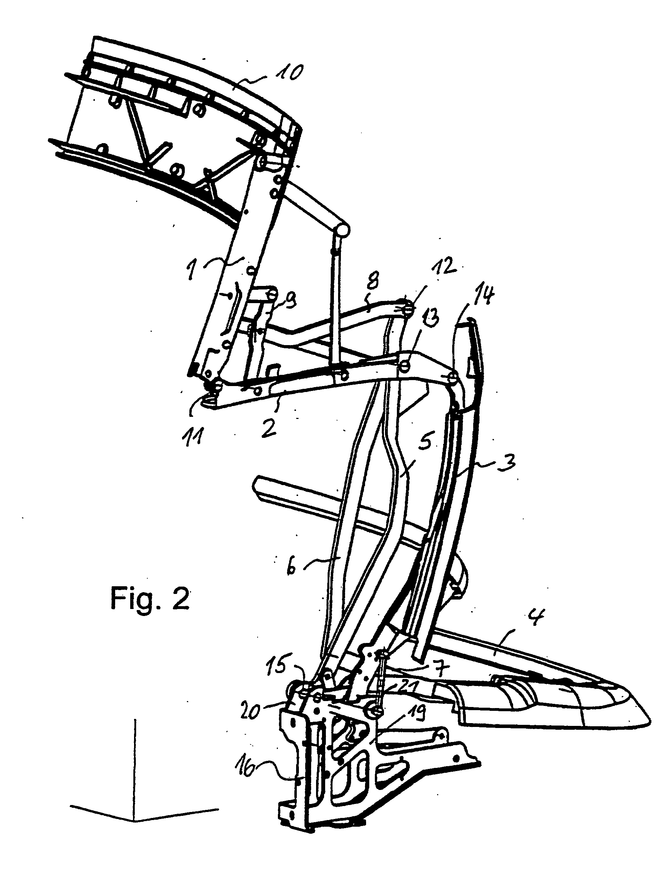

- Fig. 2: eine ausschnittweise schaubildliche Darstellung des Verdeckgestänges eines Klappverdeckes nach Figur 1 bei in einer Teilöffnungslage befindlichem Verdeck;

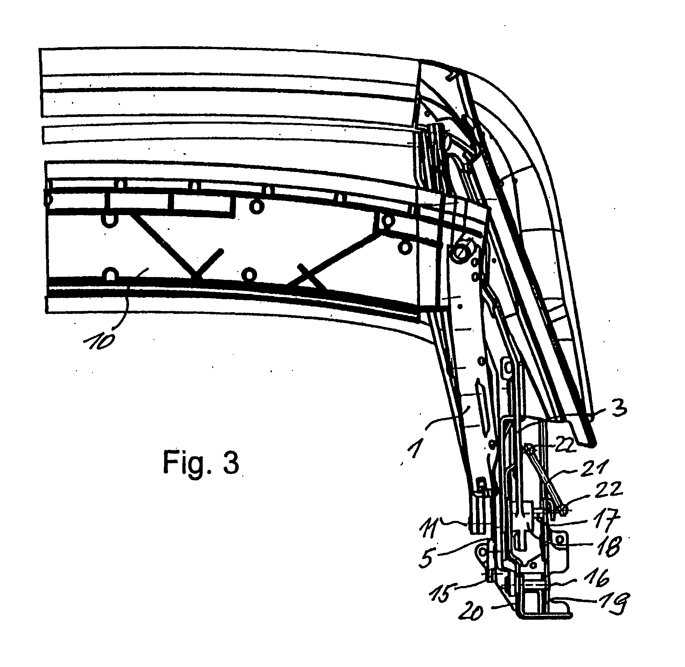

- Fig. 3: eine Draufsicht auf das Verdeckgestänge eines Klappverdeckes nach Figur 1 bei in einer Teilöffnungslage befindlichem Verdeck;

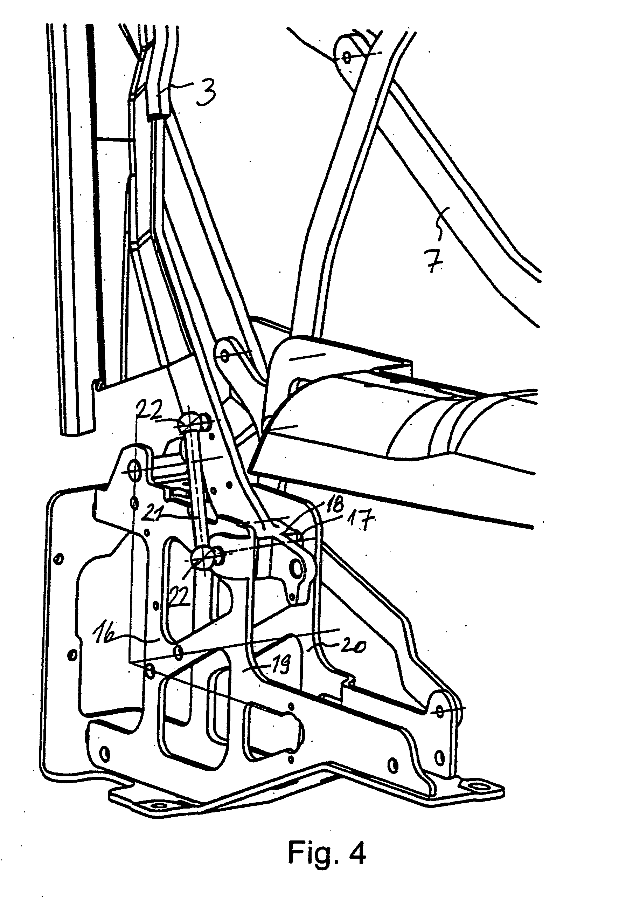

- Figur 4: eine ausschnittsweise schaubildliche Darstellung der Anbindung von Hauptsäule und Hauptlenker des Verdeckgestänges an die Fahrzeugkarosserie, im vergrößerten Maßstab.

Bei dem in der Zeichnung zum Ausführungsbeispiel lediglich hinsichtlich des Verdeckgestänges dargestellten Klappverdeck für Cabriofahrzeuge umfaßt das Verdeckgestänge in der üblichen Weise eine Gruppe von Rahmenteilen und eine Gruppe von Lenkern, wobei die Gruppe der Rahmenteile ein vorderes 1 und ein hinteres Dachrahmenteil 2 eine Hauptsäule 3 und einen Stoffspannbügel 4 und die Gruppe der Lenker einen Hauptlenker 5 sowie einerseits dem Stoffspannbügel 4 zugeordnete Spannstangen 6 und 7 und andererseits der Bewegung des vorderen Dachrahmenteiles 1 zugeordnete Antriebslenker 8 und 9. An das vordere Dachrahmenteil 1 ist ein bei geschlossenem Verdeck auf dem in der Zeichnung im Einzelnen nicht gezeigten Windschutzscheibenrahmen aufliegender Frontspriegel 10 angeschlossen. Hinterendig ist das vordere Dachrahmenteil 1 um eine quer zur Fahrzeuglängsmittelebene ausgerichtete Achse 11 schwenkbar mit dem hinteren Dachrahmenteil 2 verbunden, welches seinerseits hinterendig an der Hauptsäule 3 angelenkt ist. Der Hauptlenker 5 steht an seinem oberen Ende vermittels eines um eine horizontal und quer zur Fahrzeuglängsmittelebene ausgerichtete Achse 12 mit dem Antriebslenker 8 in Antriebsverbindung. An dem hinteren Dachteil 2 ist der Hauptlenker 5 um eine einen ersten Gelenkpunkt eines räumlichen Viergelenkes bildende windschief ausgerichtete Achse 13 angelenkt. Desgleichen ist die Hauptsäule 3 oberendig um eine windschief und parallel zur Anlenkachse 13 des Hauptlenkers 5 ausgerichtete, einen zweiten Gelenkpunkt des räumlichen Viergelenkes bildende Achse 14 an das freie Ende des hinteren Dachrahmenteiles 2 angeschlossen. Karosserieseitig ist der Hauptlenker 5 vermittels eines einen dritten Gelenkpunkt des räumlichen Viergelenkes bildenden Kugelgelenkes 15 an eine in nicht näher dargestellter Weise mit der Fahrzeugkarosserie. verbundene Konsole 16 angeschlossen. Die Hauptsäule 3 ist unterendig vermittels eines Lagerauges 17 auf einer horizontal und quer zur Fahrzeuglängsmittelebene ausgerichtet angeordneten Achse 18 schwenk-und quer zur Fahrzeuglängsmittelachse verschiebbar abgestützt, wobei das Schiebegelenk 17/18 den vierten Gelenkpunkt des räumlichen Viergelenkes bildet. Die durch die windschief ausgerichteten Achsen 13 und 14 gebildeten Gelenkpunkte des räumlichen Viergelenkes weisen dabei jeweils einen Gelenkfreiheitsgrad auf, während die dreh-und verschiebbare Hauptsäulenanlenkung 17/18 zwei Gelenkfreiheitsgrade aufweist und schließlich die sphärische Gelenkausbildung der karosserieseitigen Anlenkung des Hauptspriegels drei Gelenkfreiheitsgrade aufweist, so daß sich bei der dargestellten Ausführungsform eine Gesamtzahl der Gelenkfreiheitsgrade des räumlichen Viergelenkes auf sieben summiert Es kann jedoch unter bestimmten Umständen auch eine Verringerung der Gesamtzahl der Gelenkfreiheitsgrade auf lediglich sechs vorgesehen werden. Die die Lagerachse 17 des den vierten Gelenkpunkt des räumlichen Viergelenkes bildenden Dreh-Schiebegelenkes der Hauptsäulenabstützung tragende Konsole 16 ist.doppelwandig ausgebildet Die Achse 17 ist zwischen den beiden Wandungen 19 und 20 der Konsole 16 aufgenommen, während das den Hauptlenker 5 abstützende, den dritten Gelenkpunkt des räumlichen Viergelenkes bildende Kugelgelenk 15 an der bezüglich der Fahrzeuglängsmitte innenliegenden Wandung 20 der Konsole 16 angeordnet ist. Der Erzwingung einer zur Fahrzeugmitte hin gerichteten Verlagerung des unteren Endes der Hauptsäule 3 beim Zusammenfalten des Verdeckgestänges ist der karosserieseitigen Anlenkung 17/18 der Hauptsäule 3 ein starrer Hilfslenker 21 zugeordnet ist, weicher einerseits vermittels der Konsole 16 an der Karosserie abgestützt ist und andererseits mit einem Abstand zu deren karosserieseitiger Anlenkung 17/18 an der Hauptsäule 3 angreift. Der Hilfslenker 21 ist bezüglich der Fahrzeuglängsmittelebene zur Hauptsäule 3 und zur Konsole 16 außenseitig angeordnet und sowohl an die Hauptsäule 3 als auch an die Konsole 16 vermittels jeweils eines Kugelgelenkes 22 angeschlossen.

## Patentansprüche

1. Klappverdeck für Cabriofahrzeuge mit einem zum Öffnen des Verdeckes einklappbaren Verdeckgestänge, welches eine um eine quer zur Fahrzeuglängsmittelebene ausgerichtete Achse (18) schwenkbar an die Fahrzeugkarosserie angeschlossene Hauptsäule (3), einen um eine horizontale Achse (14) schwenkbar mit dieser -verbundenen. hinteren Dachrahmenteil (2) sowie einen einerseits an der Fahrzeugkarosserie und andererseits am hinteren Dachrahmenteil (2) angelenkten Hauptlenker (5) .umfaßt, wobei die Anlenkungen von Hauptsäule (3) und Hauptlenker (5) einerseits an der Fahrzeugkarosserie und andererseits am hinteren Dachrahmenteil (2) derart gestaltet sind, daß sie ein räumliches Viergelenk bilden,
**dadurch gekennzeichnet,**
**daß** die karosserieseitige Anlenkung (17, 18) der Hauptsäule (3) auf einer horizontalen, quer zur Fahrzeuglängsmittelebene ausgerichteten Achse (18) verlagerbar angeordnet ist.

2. Klappverdeck nach Anspruch 1, **dadurch gekennzeichnet, daß** in Verbindung mit einer zueinander parallelen Anordnung und windschiefen Ausrichtung der Anlenkachsen von Hauptsäule und Hauptlenker am hinteren Dachrahmenteil die karosserieseitige Anlenkung des Hauptlenkers als Kugelgelenk, wobei die karosserieseitige Anlenkung der Hauptsäule auf eine horizontalen quer zur Fahrzeuglängsmittelebene ausgerichteten Achse verlagerbar angeordnet ist.

3. Klappverdeck nach Anspruch 1 oder 2, **dadurch gekennzeichnet, daß** die karosserieseitige Anlenkung der Hauptsäule (3) als quer zur Fahrzeuglängsmittelebene verstellbares Schiebegelenk (17) ausgebildet ist.

4. Klappverdeck nach einem der Ansprüche 1 bis 3, **dadurch gekennzeichnet, daß** die Hauptsäule (3) und der Hauptlenker (5) untereinander ungleiche Längen aufweisen.

5. Klappverdeck nach einem der Ansprüche 1 bis 4, **dadurch gekennzeichnet, daß** die Hauptsäule (3) und der Hauptlenker (5) vermittels einer doppelwandigen Konsole (16) an die Fahrzeugkarosserie angeschlossen sind, wobei wenigstens die das karosserieseitige Ende der Hauptsäule (3) lagernde Achse (18) zwischen den beiden Wandungen der Konsole (16) angeordnet ist.

6. Klappverdeck nach einem der Ansprüche 1 bis 5, **dadurch gekennzeichnet, daß** der zwangsweisen Verlagerung der karosserieseitigen Anlenkung der Hauptsäule (3) ein starrer Hilfslenker (21) zugeordnet ist, welcher einerseits an der Karosserie abgestützt ist und andererseits mit einem Abstand zu deren karosserieseitigen Anlenkung an der Hauptsäule (3) angreift.

7. Klappverdeck nach Anspruch 6, **dadurch gekennzeichnet, daß** der Hilfslenker (21) an der bezüglich der Fahrzeuglängsmitte außenliegenden Wandung der die Lagerungen von Hauptsäule (3) und Hauptlenker (5) aufnehmenden Konsole (16) angeordnet ist.

8. Klappverdeck nach Anspruch 6 oder 7, **dadurch gekennzeichnet, daß** der Hilfslenker (21) sowohl an die Hauptsäule (3) als auch an die Konsole (16) vermittels eines Kugelgelenkes (22) angeschlossen ist.

9. Klappverdeck nach Anspruch 1, **dadurch gekennzeichnet, daß** das räumliche Viergelenk als räumliches Parallelogramm ausgebildet ist, bei dem die Summe der Gelenkfreiheitsgrade lediglich 5 beträgt.

10. Klappverdeck nach Anspruch 9, **dadurch gekennzeichnet, daß** die Hauptsäule (3) und der Hauptlenker (5) untereinander gleiche Längen aufweisen und um zueinander parallele, windschief ausgerichtete Anlenkachsen (13, 14) am hinteren Dachrahmenteil (2) und um zueinander parallele, quer zur Fahrzeuglängsmittelebene ausgerichtete Achsen an der Fahrzeugkarosserie angelenkt sind, wobei lediglich die karosserieseitige Anlenkung (17, 18) der Hauptsäule (3) quer zur Fahrzeuglängsmittelebene verlagerbar ist.

## Claims

1. Folding top for convertible vehicles, comprising a foldable top linkage for opening the top, which linkage comprises a main column (3) that is connected to the vehicle body rotatably about a shaft (18) extending transversely to the vehicle longitudinal central plane, a rear roof frame part (2) connected to said column (3) rotatably about a horizontal shaft (14), and also a main connecting rod (5) linked to the vehicle body, on the one hand, and to the rear roof frame part (2), on the other hand, the linkages of the main column (3) and main connecting rod (5) to the vehicle body, on the one hand, and to the rear roof frame part (2), on the other hand, being configured such that they form a three-dimensional, four-link system, **characterised in that** the body-side linkage (17, 18) of the main column (3) is arranged displaceably on a horizontal shaft (18) extending transversely to the vehicle longitudinal central plane.

2. Folding top according to claim 1, **characterised in that**, in conjunction with a mutually parallel arrangement and an askew extension of the linking shafts of the main column and main connecting rod at the rear roof frame part, the body-side linkage of the main connecting rod is displaceably arranged as a ball-and-socket joint, the body-side linkage of the main column being displaceably arranged on a horizontal shaft extending transversely to the vehicle longitudinal central plane.

3. Folding top according to either of claims 1 and 2, **characterised in that** the body-side linkage of the main column (3) is configured as a sliding joint (17) that is adjustable transversely to the vehicle longitudinal central plane.

4. Folding top according to any of claims 1 to 3, **characterised in that** the main column (3) and the main connecting rod (5) have unequal lengths.

5. Folding top according to any of claims 1 to 4, **characterised in that** the main column (3) and the main connecting rod (5) are connected to the vehicle body by means of a double-walled bracket (16), at least the shaft (18) supporting the body-side end of the main column (3) being arranged between the two walls of the bracket (16).

6. Folding top according to any of claims 1 to 5, **characterised in that** a rigid auxiliary connecting rod (21), which is supported on the body, on the one hand, and engages with the main column (3), with spacing from its body-side linkage, on the other hand, is associated with the enforced displacement of the body-side linkage of the main column (3).

7. Folding top according to claim 6, **characterised in that** the auxiliary connecting rod (21) is arranged on the outer wall, with respect to the vehicle longitudinal centre, of the bracket (16) receiving the bearings of the main column (3) and main connecting rod (5).

8. Folding top according to either of claims 6 and 7, **characterised in that** the auxiliary connecting rod (21) is connected both to the main column (3) and to the bracket (16) by means of a ball-and-socket joint (22).

9. Folding top according to claim 1, **characterised in that** the three-dimensional, four-link system is configured as a three-dimensional parallelogram, wherein the sum of the joint degrees of freedom is only 5.

10. Folding top according to claim 9, **characterised in that** the main column (3) and the main connecting rod (5) have equal lengths and are articulated about mutually parallel linking shafts (13, 14), extending askew on the rear roof frame part (2), and about mutually parallel shafts, extending transversely to the vehicle longitudinal central plane on the vehicle body, only the body-side linkage (17, 18) of the main column (3) being displaceable transversely to the vehicle longitudinal central plane.

## Revendications

1. Capote pliable pour véhicule automobile cabriolet comportant un ensemble de barres escamotable en vue d'ouvrir la capote, lequel ensemble comporte
- un montant principal (3) raccordé à la carrosserie du véhicule et apte à pivoter autour d'un axe (18) orienté transversalement au plan médian longitudinal du véhicule,
- une partie arrière de cadre de toiture (2) relié audit montant et apte à pivoter autour d'un axe horizontal (14),
- ainsi qu'un bras principal (5) articulé au niveau de la carrosserie du véhicule d'une part et au niveau de la partie arrière de cadre de toiture d'autre part, les articulations du montant principal (3) et du bras principal (5) avec la carrosserie du véhicule d'une part et avec la partie arrière de cadre de toiture (2) d'autre part étant conformées de façon à former un quadrilatère articulé à trois dimensions
**caractérisée en ce que**
l'articulation (17, 18) du montant principal (3) du côté carrosserie est disposée de façon déplaçable sur un axe horizontal orienté transversalement au plan médian longitudinal du véhicule.

2. Capote pliable selon la revendication 1, **caractérisée en ce que**, en liaison avec un agencement parallèle et une orientation inclinée des axes d'articulation du montant principal et du bras principal sur la partie arrière de cadre de toiture, l'articulation du bras principal du côté de la carrosserie est conformée en articulation à rotule, l'articulation (17, 18) du montant principal du côté de la carrosserie étant disposée de façon déplaçable sur un axe horizontal orienté transversalement au plan médian longitudinal du véhicule.

3. Capote pliable selon la revendication 1 ou 2, **caractérisée en ce que** l'articulation du montant principal (3) du côté de la carrosserie est conformée en articulation coulissante (17) déplaçable transversalement au plan médian longitudinal du véhicule.

4. Capote pliable selon l'une des revendications 1 à 3, **caractérisée en ce que** le montant principal (3) et le bras principal (5) ont des longueurs différentes.

5. Capote pliable selon l'une des revendications 1 à 4, **caractérisée en ce que** le montant principal (3) et le bras principal (5) sont raccordés à la carrosserie du véhicule au moyen d'une console à double paroi (16), au moins l'axe (18) logeant l'extrémité du montant principal (3) du côté de la carrosserie étant placé entre les deux parois de la console.

6. Capote pliable selon l'une des revendications 1 à 5, **caractérisée en ce qu'**un bras auxiliaire rigide est associé au déplacement forcé de l'articulation du montant principal (3) du côté de la carrosserie, lequel bras auxiliaire est d'une part supporté au niveau de la carrosserie et s'engage d'autre part avec le montant principal (3) à distance de son articulation du côté de la carrosserie.

7. Capote pliable selon la revendication 6, **caractérisée en ce que** le bras auxiliaire (21) est agencé sur la paroi extérieure, par rapport au milieu longitudinal du véhicule, de la console (16) recevant les paliers du montant principal (3) et du bras principal (5).

8. Capote pliable selon la revendication 6 ou 7, **caractérisée en ce que** le bras auxiliaire (21) est raccordé aussi bien au montant principal (3) qu'à la console (16) au moyen d'une articulation à rotule (22).

9. Capote pliable selon la revendication 1, **caractérisée en ce que** le quadrilatère articulé en trois dimensions est conformé en parallélogramme à trois dimensions dans lequel la somme des degrés de liberté des articulations n'est que de 5.

10. Capote pliable selon la revendication 9, **caractérisée en ce que** le montant principal (3) et le bras principal (5) ont des longueurs différentes et sont articulés autour d'axes d'articulation (13, 14) parallèles et inclinés au niveau de la partie arrière (2) du cadre de toiture et autour d'axes parallèles et orientés transversalement au plan médian longitudinal du véhicule au niveau de la carrosserie du véhicule, l'articulation (17, 18) du montant principal (3) du côté de la carrosserie étant déplaçable transversalement au plan médian longitudinal du véhicule.
